(19) Europäisches Patentamt
European Patent Office
Office européen des brevets

(11) EP 4 692 020 A1

(12) EUROPEAN PATENT APPLICATION
published in accordance with Art. 153(4) EPC

(43) Date of publication:
11.02.2026 Bulletin 2026/07

(51) International Patent Classification (IPC):
$C04B\ 28/02^{(2006.01)}$     $C04B\ 14/28^{(2006.01)}$
$C04B\ 22/14^{(2006.01)}$     $C04B\ 24/12^{(2006.01)}$

(21) Application number: 24780443.8

(52) Cooperative Patent Classification (CPC):
C04B 14/28; C04B 22/14; C04B 24/12; C04B 28/02

(22) Date of filing: 27.03.2024

(86) International application number:
PCT/JP2024/012240

(87) International publication number:
WO 2024/204338 (03.10.2024 Gazette 2024/40)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 31.03.2023 JP 2023059618

(71) Applicant: TOKUYAMA CORPORATION
Yamaguchi 745-8648 (JP)

(72) Inventors:
• MORI, Akiyoshi
Shunan-shi, Yamaguchi 745-8648 (JP)
• ADACHI, Jo
Shunan-shi, Yamaguchi 745-8648 (JP)
• CHABAYASHI, Takashi
Shunan-shi, Yamaguchi 745-8648 (JP)

(74) Representative: Kuhnen & Wacker
Patent- und Rechtsanwaltsbüro PartG mbB
Prinz-Ludwig-Straße 40A
85354 Freising (DE)

(54) METHOD FOR PRODUCING HYDRAULIC COMPOSITION SLURRY

(57) The strength development property of cement using low IM cement clinker is improved. Low IM cement clinker powder having a total content of $C_3A$ and $C_4AF$ not less than 22 mass% and not more than 40 mass%, calculated according to Bogue's formulae, and iron modulus (I.M.) of 0.8 to 1.3 which indicates the mass ratio of $Al_2O_3$ to $Fe_2O_3$ in the cement clinker, is mixed with water to produce the hydraulic composition slurry. The low IM cement clinker powder contains at least limestone powder and gypsum powder, in addition to the low IM cement clinker. When mixing with water, tri-isopropanol-amine (TIPA) and/or diethanol-isopropanol-amine (DEIPA) is added.

FIG.2

EP 4 692 020 A1

## Description

Field of the Invention

The present invention relates to a method for producing a hydraulic composition slurry.

The present invention relates to a method for producing a hydraulic composition slurry containing cement clinker, gypsum, limestone, additives, and water. In particular, the present invention relates to improving the strength development property of the hydraulic composition by adding a specific additive when mixing the mixture of cement clinker, gypsum, and limestone with water.

Background Art

The cement industry is a mass-production and mass-consumption industry, and resource and energy savings have been and will be a top priority issue. For example, for the production of Portland cement, the most mass-produced cement, the raw materials prepared to have a prescribed elemental composition have to be baked at a temperature as high as 1450 degree Celsius - 1550 degree Celsius to make cement clinker, and the energy cost to obtain the temperature is enormous.

By the way, the effective utilization of wastes and by-products has become an important issue in connection with recent global environmental problems. Taking advantage of the characteristics of the cement industry and cement production facilities, the effective utilization or processing of wastes as the raw materials or the fuel for cement production has been considered effective for safe and mass disposal thereof.

The present inventors and so on have proposed a new cement clinker, containing a high volume of waste-derived minerals, capable of being baked at a relatively low temperature, and having good physical properties such as strength (Patent Document 1: JP 5665,638B). The cement clinker has a elemental composition where the total amount of $3CaO$-$Al_2O_3$ (hereinafter referred to as $C_3A$) and $4CaO$-$Al_2O_3$-$Fe_2O_3$ (hereinafter referred to as $C_4AF$) is at least 22%, the amount of $C_3S$ is at least 60%, and the iron modulus (I.M.) is 1.3 or less. The cement clinker will be referred to as "low IM cement clinker."

Conventionally, pulverization agents, such as diethylene glycol, have been used in the pulverization process of Portland cement to improve the pulverization efficiency of the cement clinker, and triethanol-amine and tri-isopropanol-amine have been used in some cases (for example, Non-Patent Document 1).

The inventors have found that pulverization agents such as diethanol-isopropanol-amine improve the compressive strength of the cement (Patent Document 2: JP 6825,171B).

Prior Art List

Patent Literature

Patent document 1: JP 5665,638B
Patent document 2: JP 6825,171B

Non-patent document

Non-patent document 1: "Ceramic Engineering Handbook" (2nd Edition), Gihodo Shuppan, published March 31, 2002, edited by the Ceramic Society of Japan, p. 231, left column.

Summary of the Invention

Problem to be Solved by the Invention

The low IM cement clinker is suitable for increasing the content of waste materials, compared to conventional cement clinkers, and is produced at a lower baking temperature. And, slurry of hydraulic compositions with better strength development property has been required.

The object of the invention is to improve the strength development property of the hydraulic composition slurry.

Means for Solving the Problem

According to the invention, low IM cement clinker powder, having a total content of $C_3A$ and $C_4AF$ not less than 22 mass% and not more than 40 mass%, calculated according to Bogue's formulae, and iron modulus (I.M.) of 0.8 to 1.3 which indicates the mass ratio of $Al_2O_3$ to $Fe_2O_3$ in the cement clinker, is mixed with water to produce hydraulic composition slurry. The low IM cement clinker powder contains at least limestone powder and gypsum powder, in addition to the low IM cement clinker, and tri-isopropanol-amine (TIPA) and/or diethanol-isopropanol-amine (DEIPA) is added when mixing the low IM cement clinker powder with water.

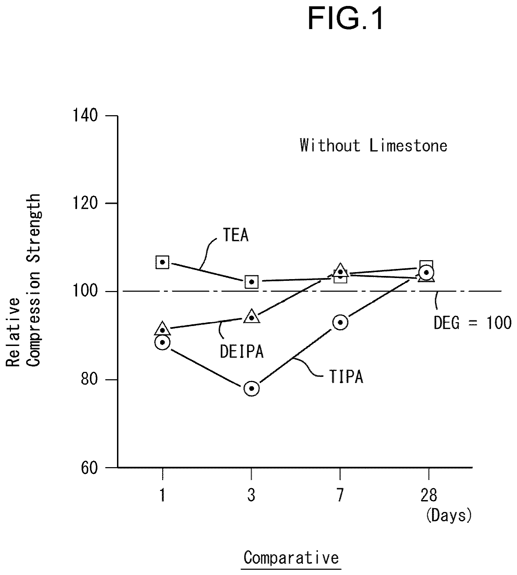

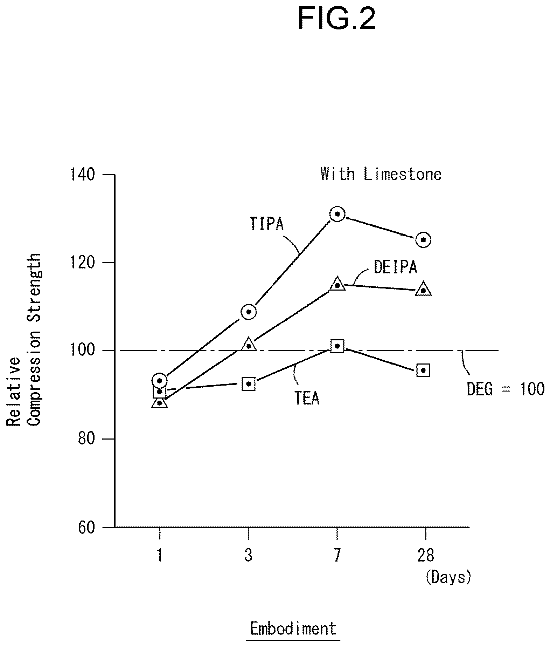

According to Patent Document 2, DEIPA was added when the low IM cement clinker was pulverized, and therefore, DEIPA was a pulverization agent. In contrast, according to the invention, DEIPA and/or IPA is added when mixing with water. As shown in Table 4 and Fig. 2, if DEIPA and/or TIPA is added when mixing with water and not when pulverizing, and if the low IM cement clinker powder contains limestone powder, TIPA and DEIPA afford high strength development property, and in particular, TIPA affords very high strength development property. On the contrary, to low IM cement clinker powder not including limestone powder, TIPA does not contribute to the strength development property, and DEIPA contributes to slight improvement in strength development property (Table 3 and Fig. 1). When TIPA and DEIPA are mixed during pulverization and no limestone is mixed, the contribution of DEIPA to strength development property is slight, and TIPA does not contribute to strength development property (Table 2).

TIPA and/or DEIPA may be added into slurry immediately after the mixing of water and low IM cement clinker powder. However, when they are mixed into water to be mixed with low IM cement clinker powder, they work uniformly and efficiently.

Preferably, water of not less than 30 mass parts and not more than 100 mass parts is mixed with low IM cement clinker powder of 100 mass parts, and preferably, water of not less than 40 mass parts and not more than 65 mass parts is mixed. The temperature of water when mixing is, for example, not lower than 5 degree Celsius and not higher than 35 degree Celsius. The mixing period, the mixing apparatus, and so on are determined according to the usual method in the art.

Preferably, TIPA and/or DEIPA of not less than 0.01 mass parts and not more than 0.05 mass parts in total is added to the low IM cement clinker powder of 100 mass parts. The improvement in strength development property by TIPA and DEIPA appears with addition of not less than 0.01 mass parts and does not increase more with addition over 0.05 mass parts. Preferably, TIPA and/or DEIPS is added at an amount in total of not less than 0.02 mass parts and not more than 0.04 mass parts. Particularly preferably, TIPA is added at an amount of not less than 0.01 mass parts and not more than 0.05 mass parts to the low IM cement clinker powder of 100 mass parts, and most preferably, TIPA is added at an amount of not less than 0.02 mass parts and not more than 0.04 mass parts. While hydraulic composition slurries often include aggregates such as sand and gravel, the aggregates have a small specific surface area and a low reactivity. Since TIPA and DEIPA work on the low IM cement clinker powder, the amount of them is determined based upon the amount of the low IM cement clinker powder.

Preferably, the low IM cement clinker powder contains limestone powder at a concentration of not less than 2 mass% and not more than 10 mass%, in particular, not less than 3 mass% and not more than 8 mass%. At the same time, the low IM cement clinker powder contains gypsum powder at a concentration of not less than 1.5 mass% and not more than 5 mass%, in particular, not less than 1.8 mass% and not more than 3 mass%.

Advantageous Effects of the Invention

The hydraulic composition slurry produced according to the present invention has very good strength development property (Table 4 and Fig. 2).

Brief Description of the Drawings

Fig. 1: A characteristic diagram indicating the results of strength test to comparative examples.
Fig. 2: A characteristic diagram indicating the results of strength test to embodiments.

Features for Carrying out the Invention

The $C_3A$, $C_4AF$ and $C_3S$ contents are calculated according to Bogue's formulae in the invention.
The Bogue's formulae have been used, along with indices and moduli, to calculate the approximate composition of a cement clinker according to the values of elemental compositions of major elements and have been well known to those skilled in the art. For the sake of clarity, the following indicates how to determine the contents of minerals in cement clinker in mass% unit according to the Bogue's formulae.

$$C_3S \text{ content} = (4.07 \times CaO) - (7.60 \times SiO_2) - (6.72 \times Al_2O_3) - (1.43 \times Fe_2O_3)$$

$$C_2S \text{ content} = (2.87 \times SiO_2) - (0.754 \times C_3S)$$

$$C_3A \text{ content} = (2.65 \times Al_2O_3) - (1.69 \times Fe_2O_3)$$

$$C_4AF \text{ content} = 3.04 \times Fe_2O_3$$

The values of iron modulus (I.M.), the hydraulic modulus (H.M.), silica modulus (S.M.), activity index (A.I.), and lime saturation degree (L.S.D.) are determinable according to the elemental composition of major elements. These moduli and indices are used as characteristic values for cement clinker production control and used as indices and moduli for the production control. While they have been well known to those skilled in the art, for the sake of clarity, the calculation method of iron modulus and so on is described below in mass ratio unit. "CaO", "SiO_2", "Al_2O_3", and "Fe_2O_3" in the below equations are measurable in accordance with JIS R5202 "Methods for Chemical Analysis of Portland Cement" and JIS R5204 "Chemical Analysis Method of Cement by X-ray Fluorescence."

$$\text{Hydraulic modulus (H.M.)} = CaO/(SiO_2 + Al_2O_3 + Fe_2O_3)$$

$$\text{Silica modulus (S.M.)} = SiO_2/(Al_2O_3 + Fe_2O_3)$$

$$\text{Activity index (A.I.)} = SiO_2/Al_2O_3$$

$$\text{Iron modulus (I.M.)} = Al_2O_3/Fe_2O_3$$

$$\text{Lime saturation degree (L.S.D.)} = CaO/(2.8 \times SiO_2 + 1.18 \times Al_2O_3 + 0.65 \times Fe_2O_3)$$

In this specification, when the upper and lower limits of a range are indicated as in "A to B" or the like, the upper and lower limits are inclusive. When a composition or a content is expressed by % unit, it means mass percent. Powders containing cement clinker and at least limestone and gypsum are referred to as cement clinker powders. The amount of water to be mixed means, in mass parts, one to be mixed with 100 mass parts of cement clinker powder. The ratio of water and the cement clinker powder is referred to as the water-cement ratio (W/C). When the cement clinker powder contains blast furnace slag, fly ash, and so on, in addition to cement clinker, limestone, and gypsum, their mass is included. However, the mass of cement clinker powder does not include aggregate such as sand or gravel.

As mentioned above, in the low IM cement clinker used in the present invention, the total content of $C_3A$ and $C_4AF$ is at least 24%. When the content of them is less than 24%, it is difficult to obtain the cement clinker with good properties such as strength development property with baking at a temperature of 1300 - 1400degree Celsius. As will be described, in order to obtain high strength development property, the $C_3S$ content of 63% or more is needed. Therefore, the total content of $C_3A$ and $C_4AF$ is at least 24% and at most 37%, preferably at least 24% and at most 35%, more preferably at least 24% and at most 32%, and most preferably at least 24% and at most 28%.

Regarding $C_4AF$ and $C_3A$, $C_4AF$ is effective for the low temperature baking and for reducing the content of f-CaO in the cement clinker. Therefore, $C_4AF$ is preferably present at least 15% by itself.

$C_3S$ content is very important to the strength development property of the cement compositions (hereafter simply "cement"). When $C_3S$ content is under 63%, a good strength development property is not obtained, even when the total content of $C_3A$ and $C_4AF$ is within the specified range and the iron modulus is also within the specified range. Since the total content of $C_3A$ and $C_4AF$ is at least 24%, the upper limit of $C_3S$ content is 76%. In order to ensure some period from the start to the end of setting, the content of $C_3S$ is preferably not less than 63% and not more than 70% and is more preferably not less than 63% and not more than 65%.

The low IM cement clinker used in the present invention may include $C_2S$. The $C_2S$ content is 15% or less and preferably 3% or more. For obtaining long-term strength, the total content of $C_2S$ and $C_3S$ is preferably at least 69% and at most 76%.

The most important feature for the cement clinker used in the present invention is the iron modulus (I.M.) of not less than 0.8 and not more than 1.3 and preferably not less than 1.14 and not more than 1.27. When the iron modulus exceeds 1.3, sufficient strength development property (more specifically, for example, mortar strength development property) cannot be obtained even when the cement clinker satisfies the other conditions. Furthermore, when the iron modulus exceeds 1.3, the period from the start of setting to the termination tends to be too long, and accordingly, the iron modulus is not more than 1.3. The iron modulus is preferably 1.14 to 1.27.

The hydraulic modulus and silica modulus are not particularly limited. However, for the good balance of various properties, the hydraulic modulus is preferably 1.8 to 2.2, more preferably 1.9 to 2.1, and the silica modulus is preferably 1.0 to 2.0, more preferably 1.1 to 1.7.

The production method of the low IM cement clinker is not particularly limited. Known cement clinker raw materials are prepared and mixed in a predetermined composition such that the moduli and indices regarding the mineral composition are in the prescribed range, and are then baked according to a known method (e.g. in a SP kiln or in a NSP kiln). Then, the clinker is easily obtained.

The preparation and mixing methods of the cement raw materials are adopted from various known methods. For example, the elemental compositions of the raw materials: wastes, by-products, and other raw materials; (CaO sources such as limestone, quick lime, slaked lime, $SiO_2$ sources such as silica stone, $Al_2O_3$ sources such as clay, iron sources such as $Fe_2O_3$ containing materials) are measured in advance, the mixing ratios of the raw materials are calculated such that the desired elemental composition is obtained, and then the raw materials are mixed in the ratios.

The raw materials for the production of the low IM cement clinker are the same as those for the production of conventional cement clinkers and are without particular restrictions. Waste materials, by-products, and so on are usable.

The use of one or more wastes and by-products in the production of the low IM cement clinker is desirable for promoting the effective use of wastes and by-products. More specific examples of usable wastes and by-products include blast furnace slag, steelmaking slag, nonferrous slag, coal ash, sewage sludge, water purification sludge, paper sludge, construction waste soil, casting sand, soot, incineration fly ash, molten fly ash, chlorine bypass dust, wood chips, waste white clay, waste coal, waste tires, shells, municipal waste and its incinerated ash, and so on. They include cement raw materials and also thermal energy source.

The low IM cement clinker includes plenty of $C_3A$ and $C_4AF$ in which aluminum is a constituent element. Therefore, compared to conventional cement clinkers, it consumes more wastes and by-products having high aluminum content.

In the present invention, the low IM cement clinker powder contains gypsum and limestone, in addition to the low IM cement clinker itself.

Usable gypsum compounds include dihydrate gypsum, hemihydrate gypsum, anhydrite gypsum and so on; known gypsum compounds for cement production are usable without particular restrictions. The amount of gypsum in the low IM cement clinker powder is preferably 1.5 to 5.0 mass% in $SO_3$ reduction and more preferably 1.8 to 3 mass%.

Various species of limestone known as cement additives are usable. For example, natural limestone and synthetic calcium carbonate are usable. The addition of limestone improves the strength development property, compared to a case without limestone.

The limestone content is preferably 2 to 10 mass% in the low IM cement clinker powder. When the limestone content is less than 2%, the synergetic effect with the additive is not sufficient. For the better strength improvement effect, the limestone content of 3 to 8 mass% is more preferable.

In addition to limestone, the low IM cement clinker powder may contain one or more of fly ash, blast furnace slag, siliceous admixture, and so on. In the case, the total content of limestone, blast furnace slag, fly ash, and siliceous admixture is not more than 10 mass% of the low IM cement clinker powder.

The cement clinker, gypsum, limestone, and other admixtures are preferably adjusted in the fineness to have specific surface area of 2800 to 4500 $cm^2/g$ in Blaine specific surface area.

For adjusting the fineness, various known pulverization methods are usable without particular restrictions. Respective components may be pulverized respectively, or their mixture may be pulverized. Pulverization apparatuses such as a ball mill and a vertical mill are usable.

The hydraulic composition slurry produced according to the present invention is usable as a Portland cement slurry, in particular one which is in agreement with JIS standards. Portland cement includes ordinary Portland cement, early strength Portland cement, and ultra early strength Portland cement, and so on. The slurry is usable as a component of mixed cements and solidifiers such as soil solidifiers. Aggregates such as sand and gravel may be added when producing Portland cement, mixed cement, soil solidifiers, and so on.

According to the production method of hydraulic composition slurry according to the invention, tri-isopropanol-amine (TIPA) and/or diethanol-isopropanol-amine (DEIPA) is added when mixing the low IM cement clinker powder with water. The low IM cement clinker powder contains limestone powder and gypsum powder in addition to the cement clinker powder itself. High strength development property is achieved when TIPA and or DEIPA, and limestone powder are included. The strength development properties without limestone are shown in Table 3 and Fig. 1, and those with limestone are shown in Table 4 and Fig. 2.

The kneading method is not particularly restricted, and known methods with usage of a cement mixer, a propeller mixer, and so on may be adopted. It is preferable to mix TIPA and/or DEIPA uniformly with water in advance before the mixing. However, TIPA and/or DEIPA may be added to the slurry immediately after the mixing of water and the low IM cement clinker powder, for example.

Embodiments

The invention will be described in more detail with reference to embodiments; however, the invention is not limited to the embodiments.

Industrial raw materials, including limestone, coal ash, construction waste soil, and so on were mixed and baked in an electric furnace at 1350 degree Celsius for 90 minutes to obtain the low IM cement clinker having a mineral composition according to the Bogue's formulae and index values shown in Table 1.

To 100 mass% of the low IM cement clinker, $2\pm0.2$ mass% of gypsum in $SO_3$ reduction was added, and limestone was further added. The mixture was pulverized to a specific surface area of $3200\pm50$ cm$^2$/g according to Blaine specific surface area to produce cement (hydraulic composition). The mortar compressive strengths of the cement were measured.

The measurement methods for various parameters were as follows.

Measurement of elemental compositions of raw materials and cement clinker: measured by X-ray fluorescence analysis according to JIS R5204.

Measurement of compressive strengths of mortar: measured according to JIS R5201. The compressive strength of one with DEG, a conventional common pulverization agent, was set at 100 and compared with others.

[Table 1]

| | | Mineral Composition according to Bogue's Formulae % | | | | Three Moduli | | |
|---|---|---|---|---|---|---|---|---|
| | Baking Temperature of Clinker | C3S | C2S | C3A | C4AF | HM | SM | IM |
| Clinker | 1350°C | 64.3 | 8.9 | 7.8 | 16.4 | 2.06 | 1.69 | 1.18 |

<Production of hydraulic composition slurry using the additives as pulverization agents>

To 100 mass% of the cement clinker obtained as described above, gypsum of $2.0\pm0.2$ mass% in $SO_3$ reduction (a mixture of dihydrate gypsum and hemihydrate gypsum: 1:1 by weight) was added. To the mixture of 100 mass% of the cement clinker and gypsum, 0.03 mass parts of an additive was added, and then pulverized in a ball mill such that the resultant Blaine specific surface area was $3200\pm50$ cm$^2$/g. The resulting low IM cement clinker powder was mixed and kneaded with water to produce a hydraulic composition slurry; the water-cement ratio was 50%.

The additives used were diethylene-glycol ("DEG"), tri-isopropanol-amine ("TIPA"), diethylene-isopropanol-amine ("DEIPA"), and triethanol-amine ("TEA").

The compressive strengths of the hydraulic composition slurries where the additives were used as pulverization agents were measured according to JIS R5201. The results are shown in Table 2.

[Table 2]

| Sample | Additive | Limestone | Addition | 1 Day | 3 Days | 7 Days |
|---|---|---|---|---|---|---|
| Comp.1 | DEG | 0% | Pulverization Agent | 100.0 | 100.0 | 100.0 |
| Comp.2 | TIPA | 0% | Pulverization Agent | 88.5 | 85.5 | 98.5 |
| Comp.3 | DEIPA | 0% | Pulverization Agent | 87.3 | 92.9 | 106.7 |
| Comp.4 | TEA | 0% | Pulverization Agent | 105.8 | 104.7 | 102.2 |

<Production of hydraulic composition slurry where the additives were mixed with kneading water>

To 100 mass% of the cement clinker produced as above, $2.0\pm0.2$ mass% of gypsum in $SO_3$ reduction (a 1:1 mixture of dihydrate gypsum and hemihydrate gypsum in weight) was added and then pulverized in a ball mill such that its Blaine specific surface area was $3200\pm50$ cm$^2$/g to produce low IM cement clinker powder.

Additives were mixed respectively in water for kneading with the cement clinker powder, in a ratio of 0.03 mass parts of additives to 100 mass parts of the cement clinker powder.

The water mixed with the additives and the cement clinker powder were mixed to produce hydraulic composition slurries. Their compressive strengths were measured, and the results are shown in Table 3.

[Table 3]

| Sample | Additive | Limestone | Addition | 1 Day | 3 Days | 7 Days | 28 Days |
|--------|----------|-----------|----------|-------|--------|--------|---------|
| Comp.5 | DEG | 0% | Added with Water | 100.0 | 100.0 | 100.0 | 100.0 |
| Comp.6 | TIPA | 0% | Added with Water | 88.4 | 78.0 | 92.9 | 104.1 |
| Comp.7 | DEIPA | 0% | Added with Water | 91.2 | 94.0 | 104.0 | 102.6 |
| Comp.8 | TEA | 0% | Added with Water | 107.4 | 102.1 | 104.4 | 105.2 |

<Production of hydraulic composition slurry by mixing the low IM cement clinker powder containing limestone, and water containing the additives>

To the low IM cement clinker of Table 1, gypsum and limestone were added. The added gypsum was $2.0\pm0.2$ mass% in SO$_3$ reduction (a 1:1 mixture of dihydrate gypsum and hemihydrate gypsum in weight, 3.42g in total). The added limestone was 5.26 mass parts to 100 mass parts of cement clinker. The mixture was pulverized in a ball mill such that its Blaine specific surface area was $3200\pm50$ cm$^2$/g to produce low IM cement clinker powder. The limestone concentration in the low IM cement clinker powder was 4.84 mass% and the gypsum concentration was 3.15 mass%.

In the water for kneading with the cement clinker powder, the additives were mixed. The content of the additives was 0.03 mass parts for 100 mass parts of the cement clinker powder, respectively. Hydraulic composition slurries were prepared by kneading the water with the cement clinker powder, and the compressive strengths of the slurries were measured according to JIS R5201. The results are shown in Table 4.

[Table 4]

| Sample | Additive | Limestone | Addition | 1 Day | 3 Days | 7 Days | 28 Days |
|--------|----------|-----------|----------|-------|--------|--------|---------|
| Comp.9 | DEG | 5% | Added with Water | 100.0 | 100.0 | 100.0 | 100.0 |
| Emb.1 | TIPA | 5% | Added with Water | 92.9 | 109.1 | 131.4 | 124.9 |
| Emb.2 | DEIPA | 5% | Added with Water | 88.8 | 102.0 | 115.4 | 113.8 |
| Comp.10 | TEA | 5% | Added with Water | 90.8 | 93.3 | 101.4 | 96.3 |

In Comparative Examples 1 to 4, the various additives were used as pulverization agents during cement clinker pulverization. Compared to Comparative Example 1 where a general-purpose additive DEG was added, Comparative Examples 2, 3, and 4 showed no significant improvement in strength development property.

In Comparative Examples 5 to 8, the various additives were mixed in the water for kneading the mortars. Compared to Comparative Example 5 where a general-purpose additive DEG was added, Comparative Examples 6, 7, and 8 showed no significant improvement in strength development property.

In Comparative Examples 9 and 10, and in Embodiments 1 and 2, the various additives were mixed in the kneading water to produce hydraulic composition slurries, and the cement clinker powder contained limestone. Compared to Comparative Example 9 where a general-purpose additive DEG was used, Embodiments 1 and 2 containing the additives according to the invention showed good compressive strengths at day 3 and remarkable improvement in compressive strengths at day 7 and day 28.

**Claims**

1. A production method of hydraulic composition slurry; mixing with water low IM cement clinker powder having a total content of C$_3$A and C$_4$AF, not less than 22 mass% and not more than 40 mass%, calculated according to Bogue's formulae, and iron modulus (I.M.) of 0.8 to 1.3 which indicates the mass ratio of Al$_2$O$_3$ to Fe$_2$O$_3$ in the cement clinker, to produce the hydraulic composition slurry;

wherein said low IM cement clinker powder contains at least limestone powder and gypsum powder, in addition to the low IM cement clinker,

and

wherein tri-isopropanol-amine (TIPA) and/or diethanol-isopropanol-amine (DEIPA) is added when mixing the low IM cement clinker powder with water.

2. The production method of hydraulic composition slurry according to claim 1; wherein tri-isopropanol-amine (TIPA) and/or diethanol-isopropanol-amine (DEIPA) is added to water to be mixed with the low IM cement clinker powder.

3. The production method of hydraulic composition slurry according to claim 2; wherein water of not less than 30 mass parts and not more than 100 mass parts is mixed with said low IM cement clinker powder of 100 mass parts.

4. The production method of hydraulic composition slurry according to claim 3; wherein tri-isopropanol-amine (TIPA) and/or diethanol-isopropanol-amine (DEIPA), of not less than 0.01 mass parts and not more than 0.05 mass parts in total, is added to said low IM cement clinker powder of 100 mass parts.

5. The production method of hydraulic composition slurry according to claim 4; wherein tri-isopropanol-amine (TIPA) of not less than 0.01 mass parts and not more than 0.05 mass parts is added to said low IM cement clinker powder of 100 mass parts when mixing the low IM cement clinker powder with water.

6. The production method of hydraulic composition slurry according to claim 4 or claim 5; wherein said low IM cement clinker powder contains limestone powder at a concentration of not less than 2 mass% and not more than 10 mas%, and gypsum powder at a concentration of not less than 1.5 mass% and not more than 5 mass% in $SO_3$ reduction.

# FIG.1

# FIG.2

With Limestone

Relative Compression Strength

TIPA

DEIPA

TEA

DEG = 100

140

120

100

80

60

1    3    7    28

(Days)

Embodiment

## INTERNATIONAL SEARCH REPORT

| International application No. |
|---|
| **PCT/JP2024/012240** |

| | | |
|---|---|---|
| **A. CLASSIFICATION OF SUBJECT MATTER** | | |

*C04B 28/02*(2006.01)i; *C04B 14/28*(2006.01)i; *C04B 22/14*(2006.01)i; *C04B 24/12*(2006.01)i
FI:  C04B28/02; C04B14/28; C04B22/14 B; C04B24/12 Z

According to International Patent Classification (IPC) or to both national classification and IPC

**B.  FIELDS SEARCHED**

Minimum documentation searched (classification system followed by classification symbols)

C04B28/02; C04B14/28; C04B22/14; C04B24/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| Y | JP 2012-224504 A (TOKUYAMA CORPORATION) 15 November 2012 (2012-11-15) paragraphs [0027], [0031], table 1, examples 1-3, 5-8 | 1-6 |
| Y | JP 3-183647 A (W. R. GRACE & CO.-CONN) 09 August 1991 (1991-08-09) p. 4, upper left column, line 3 to lower right column, line 12, p. 14, lower right column, line 9 to p. 15, upper left column, line 1, examples 4, 10, 13 | 1-6 |
| A | WO 2011/022217 A1 (W. R. GRACE & CO.-CONN) 24 February 2011 (2011-02-24) entire text, all drawings | 1-6 |
| A | JP 2012-091992 A (TOKYO INSTITUTE OF TECHNOLOGY) 17 May 2012 (2012-05-17) entire text, all drawings | 1-6 |
| A | JP 9-142900 A (CHICHIBU ONODA CEMENT CORP.) 03 June 1997 (1997-06-03) entire text, all drawings | 1-6 |

☑ Further documents are listed in the continuation of Box C. ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **29 May 2024** | **11 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2024/012240**

| C. | DOCUMENTS CONSIDERED TO BE RELEVANT | |
|---|---|---|
| Category* | Citation of document, with indication, where appropriate, of the relevant passages | Relevant to claim No. |
| A | JP 7180742 B1 (SUMITOMO OSAKA CEMENT CO., LTD.) 30 November 2022 (2022-11-30) <br> entire text, all drawings | 1-6 |
| A | WO 2020/241078 A1 (TOKUYAMA CORPORATION) 03 December 2020 (2020-12-03) <br> entire text, all drawings | 1-6 |

Form PCT/ISA/210 (second sheet) (July 2022)

## INTERNATIONAL SEARCH REPORT
### Information on patent family members

International application No.

**PCT/JP2024/012240**

| Patent document cited in search report | | | Publication date (day/month/year) | Patent family member(s) | | | Publication date (day/month/year) |
|---|---|---|---|---|---|---|---|
| JP | 2012-224504 | A | 15 November 2012 | US | 8864902 | B2 | |
| | | | | column 5, lines 15-20, column 5, line 35 to column 6, line 16, table 1, examples 1-3, 5-8 | | | |
| | | | | EP | 2700622 | A1 | |
| JP | 3-183647 | A | 09 August 1991 | US | 4943323 | A | |
| | | | | column 2, line 29 to column 3, line 15, column 13, lines 2-13, examples 4, 10, 13 | | | |
| | | | | EP | 415799 | A2 | |
| WO | 2011/022217 | A1 | 24 February 2011 | US | 2013/0213272 | A1 | |
| | | | | entire text, all drawings | | | |
| | | | | KR | 10-2012-0059504 | A | |
| JP | 2012-091992 | A | 17 May 2012 | CN | 102432205 | A | |
| | | | | entire text, all drawings | | | |
| | | | | KR | 10-2012-0032419 | A | |
| JP | 9-142900 | A | 03 June 1997 | (Family: none) | | | |
| JP | 7180742 | B1 | 30 November 2022 | WO | 2023/120206 | A1 | |
| | | | | entire text, all drawings | | | |
| WO | 2020/241078 | A1 | 03 December 2020 | US | 2022/0315486 | A1 | |
| | | | | entire text, all drawings | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5665638 B

- JP 6825171 B

**Non-patent literature cited in the description**

- **GIHODO SHUPPAN**. Ceramic Engineering Handbook. 31 March 2002, 231